Europäisches Patentamt

European Patent Office

Office européen des brevets

(11) Publication number: **0 221 718**
A2

# EUROPEAN PATENT APPLICATION

(21) Application number: 86308131.1

(22) Date of filing: 20.10.86

(51) Int. Cl.⁴: **G 02 B 6/38**

(30) Priority: 25.10.85 US 791441

(43) Date of publication of application:
13.05.87 Bulletin 87/20

(84) Designated Contracting States:
AT BE CH DE FR GB IT LI LU NL SE

(71) Applicant: G & H Technology, Inc.
1649 17th Street
Santa Monica, California 90404 (US)

(72) Inventor: Fan, Robert J.
18951 Kittridge Street
Reseda California (US)

Walters, Gerald E.
12521 Aristo Place
Granada Hills California (US)

(74) Representative: Smith, Philip Antony et al
REDDIE & GROSE 16 Theobalds Road
London WC1X 8PL (GB)

(54) Optical fiber connector and apparatus.

(57) Two fibres 11 to be joined have cores 12 enclosed by sheaths 13 but exposed at their ends. The ends are disposed in a square-section bore 17 of a tubular connector 15 whose enlarged ends 16 rest against an inclined surface 24 of support block 22. By applying pressure to the fibres 11 in a direction towards the block 22, using a slider mounted on base 19, the connector 15 is caused to turn so that the core ends 12 come to rest in a corner of the rectangular bore 17, thus ensuring correct alignment. Optical coupling fluid is present between the ends of the cores 12 and the bore 17 is filled with epoxy resin which is cured before the pressure is released and the connector is removed from the base 19.

FIG. 5

**Description**

## OPTICAL FIBER CONNECTOR AND APPARATUS

The present invention pertains generally to optical fibers, and, more particularly, to a method of effecting connection between the ends of two fibers to enable highly efficient transfer of a light signal thereacross.

Optical fiber waveguides are being ever more widely used for the transmission of light signals in situations that formerly were handled by electronic and electrical equipment and techniques. These fibers, having a glass or plastic core along which the light signal is propagated, are subject to occasional breakage requiring either replacement or repair. There are many situations, however, in which replacement cannot be accomplished and it is desirable to be able to interrelate the ends of two different fibers so as to transfer an optical signal from one fiber to the other without significant loss in the amplitude or other optical characteristics of the signal. Moreover, it is also desirable to be able to accomplish such a fiber connection under field conditions and in a manner insuring reliability of signal transmission across the junction.

One well received technique for splicing optical fibers to one another is disclosed in the United States Patent No. 4,483,584 to John B. Gresty, which patent is assigned to the owner of the present application and in which the individual bare fiber ends of each of the fibers to be spliced together are received in a three-pin holder with the faced-off ends of the two fibers are located slightly recessed from the outer ends of each set of three pins. The two fibers contained within three-pin holders are then received within an alignment means which brings the two sets of three pins into end contacting relation and in that way holds the two fiber ends in a very slightly spaced colinear relation which has been found necessary to effect high light signal transmission efficiency. Although satisfactory for most purposes and productive of a high efficiency light signal transmission junction, it is a relatively expensive and complicated device to manufacture.

It is a primary aim and object of the present invention to provide a connector for interrelating the ends of two fibers in order to effect a high efficiency light signal transmission junction therebetween which is simple and inexpensive to manufacture and easy to use.

Another object is the provision of apparatus for properly locating optical fiber waveguides within the connector in aligned, end spaced apart condition prior to affixation within the connector.

The optical fiber connector includes a tubular member, the outer end portions of which are enlarged slightly. The tube bore is rectangular, the central axis of which bore coincides with the tube longitudinal axis. The tube bore is sufficiently oversized as to freely receive bare fibers of the two fibers to be interconnected, one into each end. After the fibers are properly located along the same internal corner of the tubular member by the described apparatus, a quantity of a suitable encapsulant is introduced into the tubular member bore.

A connection block is a generally rectangular plate having a raised positioning member adjacent one side edge. A U-shaped force exerting means has its arms slidingly received in slots on a surface of the block enabling the arms to move parallel to the positioning member. A set of three pins are arranged on the upper surface of each of the U-shaped force exerting means and to releasably hold the optical fibers during interconnection.

To connect the fibers, the bare ends of the two optical fibers are located in the opposite ends of the tubular member bore with their ends in slightly spaced relation and including a quantity of index matching fluid therebetween. A quantity of a liquid epoxy is then inserted into the tubular member which is then brought into contact with the positioning member and are located between the three pin holders in the arms of the U-shaped member. Finally, the U-shaped force exerting means is moved toward the positioning member which applies a resilient force via the two fibers onto the tubular member that simultaneously effects two desired results: First, the tubular member rotates about its axis a sufficient amount to locate an inner corner of the tubular member with the fibers received therein immediately adjacent the positioning member; and Second, the fibers are caused to closely conform to the inner corner of the tubular member bore so as to insure alignment. This condition is maintained until the epoxy sets which may be aided by the addition of a heat lamp or other such means to cure the epoxy, if necessary.

DESCRIPTION OF THE DRAWINGS

Figure 1 shows an exploded view of a connection tube of this invention and two optical fibers to be connected thereby.

Figure 2 is a perspective view of optical fiber interconnection apparatus showing a pair of fibers being interconnected in accordance with the present invention.

Figure 3 is an end elevational, sectional view taken along the line 3-3 of Figure 2.

Figure 4 is a side elevational, sectional view taken through the connection tube and fibers contained therewithin in an intermediate stage and taken along line 4-4 of Figure 3.

Figure 5 is a side elevational, sectional view similar to Figure 4 showing the fibers correctly located within the connection tube.

Figure 6 is a view similar to Figure 4 only showing the fibers properly located with respect to one another and encapsulated in place.

Figure 7 is a perspective, partially fragmentary and sectional view of a connection tube with included fibers within a protective sleeve.

DESCRIPTION OF A PREFERRED EMBODIMENT

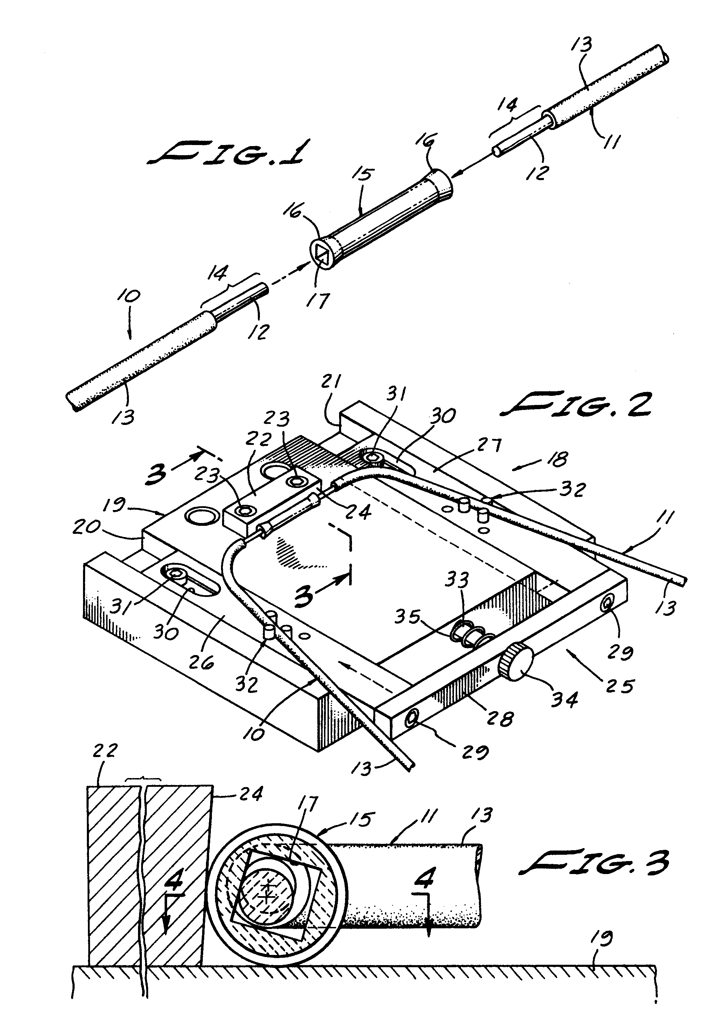

Turning now to the drawings and particularly Figure 1, there is shown a pair of optical fiber waveguides 10 and 11, the ends of which it is desired to interconnect together for transmitting in a highly efficient manner an optical signal from one to the other, each of which typically includes either a synthetic plastic or glass core 12 enclosed within an outer buffer 13. As initial preparation for connection according to the manner to be described, an end portion of buffer material is carefully removed leaving a bare fiber end portion 14 on each of the fibers 10 and 11.

The fiber interconnection and alignment means consists of an elongated tube which is generally cylindrical with enlarged end portion 16. The tube bore 17 is rectangular in cross-section (preferably square) with the bore axis being closely parallel to the axis of the tube. The tube may be constructed of glass, synthetic plastic, or metal, as long as it has its sufficient physical characteristics in order to provide a rigid body and a rectangular bore.

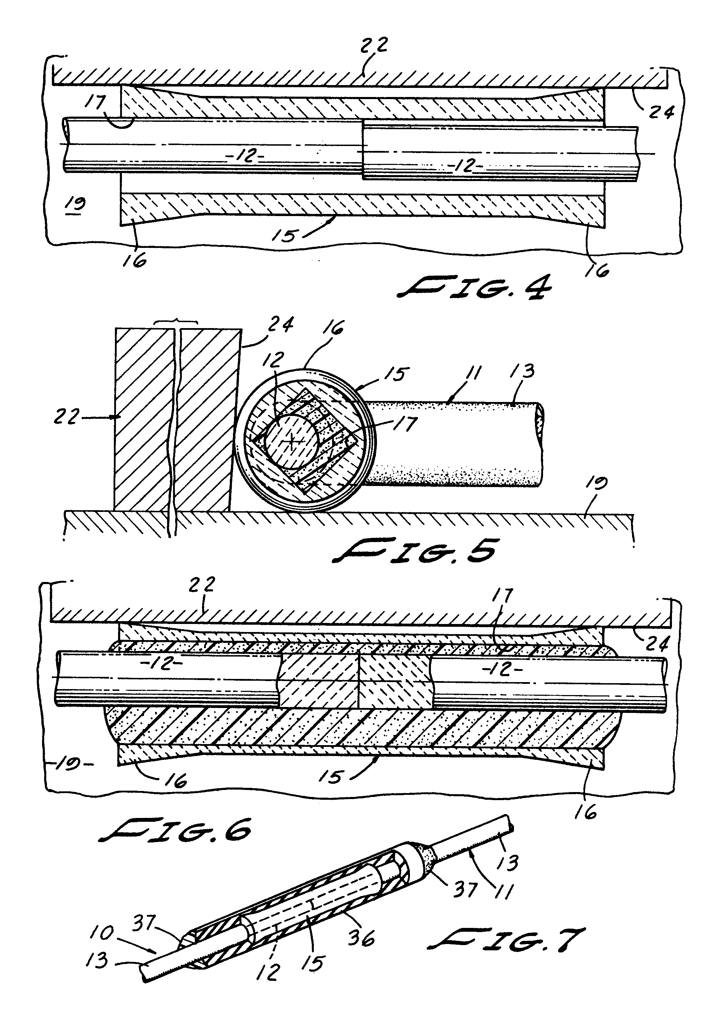

In a way that will be more particularly described, the bare ends of the fibers 10 and 11 are located within the tube 15, with the bare fiber ends slightly spaced from one another and interrelated by an index matching fluid. Next, a quantity of epoxy is inserted into the tube bore 17. Then, by means of apparatus to be described and seen best in Figure 2, the fiber ends are biased to one corner edge of the tube bore 17 by bending that portion of the fibers extending outwardly of the tube. The fibers are held in proper alignment and end spacing relation within the tube until the epoxy sets up or is cured.

Turning now to Figure 2, the apparatus for holding and maintaining the two fibers within the connection tube 15 during assembly is generally identified as at 18. The apparatus includes a generally rectangular metal plate 19 having a pair of guide channels 20 and 21 formed on an upper surface adjacent opposite edges of the plate 19 and parallel to one another. On the same surface including the channels, the plate surface lying between the channels has a positioning block or member 22 affixed to the plate surface by threaded means 23 has a side surface 24 extending upwardly at approximately 87 degrees to the plate top surface and also at 90 degrees to the longitudinal axes of the two channels 20, 21. The 3-degree slant of surface 24 with respect to 19 serves to capture the tube during alignment assembly of the fibers therewithin and prevent the tube escaping on pressurizing the fibers.

A U-shaped pressure applicator 25 has first and second side arms 26 and 27 interconnected by cross arm 28 which is secured to the ends of the side arms by threaded means 29. The dimensions and geometry of the side arms 26 and 27 are such that they can be received, respectively, in guide channels 20 and 21 in sliding relation. More particularly, each of the side arms of the means 25 includes an elongated slot 30 through which a large headed member 31 extends for threaded receipt within the bottom wall of either the track 20 or 21, as the case may be, thereby providing a limit to the movement of the side arms along the channels.

On the top surface of each of the pressure applicator side arms 26 and 27 there are provided a set of three pins 32 arranged in a triangle for a use to be described.

An elongated guide pin 33 having an oversized head 34 is slidingly received through an opening in the cross bar 28 of the pressure applicator. and has its shaft extending through a compression spring 35 into an opening in the end wall of the plate 19. Accordingly, movement of the pressure applicator 25 toward the plate 19 is resiliently resisted by the compression spring 35 tending to automatically reset the pressure applicator to an extended relation (Figure 2).

To interconnect a pair of fibers 10 and 11 in accordance with this invention, the buffer 13 is initially removed from the end portions leaving a bare fiber end portion 14 sufficient that the two fibers when placed within the tube 15 can easily be brought into close end spaced relation without the buffer interfering. The two fiber ends are then contacted with a droplet of index matching fluid, each inserted into an end of the connection tube 15 and a quantity of epoxy is inserted into the opening 17. At this time, the two fibers may be randomly located within the opening 17 and out of alignment as shown in Figure 3 and 4 which, if the interconnection were now completed, would result in an unsuitable transmission joint of low efficiency.

The next step is to take the partially connected pair of fibers and tube while holding the fibers within the tube, and locate the fibers and tube on the apparatus as shown in Figure 2. That is, with the pressure actuator 25 extended, the two fibers 10 and 11 are located within the three pin holders 32 in the side bars 26 and 27 with the tube 15 lightly contacting surface 24 of the block 22. At this time, the fibers are still randomly located within the tube and not properly aligned.

The final step consists of pushing the actuator cross bar 28 toward the end of the plate 19 which simultaneously applies transverse pressure to the side of tube 15 and two fibers received therein, while at the same time effecting a slight rotation of the tube such that the fibers are now both located in the same internal corner of the tube as shown. for example, in Figure 5 and extending along this internal corner in properly aligned relation. This pressure is maintained until the epoxy sets up which may be accelerated by use of a heating lamp (not shown). On conclusion of curing the epoxy, the actuator 24 is simply released and the final interconnected pair of fibers is simply lifted off the fixture.

When the fibers are aligned and encapsulated within the tube in the manner described. a protective sleeve 36 can be anchored about the assembly by a quantity of epoxy 37. for example, to provide additional safety and security for the fiber splice.

## Claims

1. A method of joining optical fibres in which the bare ends of the fibres are disposed in a tubular connector having an internal corner edge and a force is applied transverse to the connector axis by way of portions of the fibres extending externally of the connector in directions generally transverse to the connector axis to cause the ends of the fibres to align with each other along the internal corner edge of the connector before the ends are sealed into the connector by means of a settable material filling the connector bore.

2. A method as claimed in claim 1 in which the tube bore is rectangular in cross-section.

3. A method as claimed in claim 2 in which the tube bore is square in cross-section.

4. A method as claimed in claim 1, 2 or 3 in which the tubular connector has enlarged circular ends which rotate against an abutment when the transverse force is applied to the connector.

5. A method of fixedly aligning a pair of bare optical fiber portions within an internal corner edge of a hollow tube, comprising the steps of: locating the bare optical portions in opposite ends of the hollow tube with externally extending fiber portions arranged transversely of the hollow tube in the same first direction; applying a quantity of a cementing material into the hollow tube; holding the tube with fibers therein against transverse movement in a second direction opposite to said first direction; and applying a force along both external fiber portions intghe second direction until the cementing material sets, said force being of such magnitude as to cause the fibers internally of the tube to align within the hollow tube internal corner edge.

6. A method as claimed in claim 5, including the further step of raising the tube temperature to accelerate setting of the cementing material.

7. A method as claimed in claim 5 or 6, in which the tube is circular in cross-section and the application of force along the external fiber portions rotates the tube and locates the internal fiber portions within the tube internal corner edge.

8. A method as claimed in claim 5, 6 or 7, including the further step of contacting a quantity of index matching fluid to an end of one of said optical fiber portions before locating said fiber end portions in the tube.

9. Apparatus for aligning a pair of optical fiber end portions within a tube, said tube having a bore therethrough with an internal straight-line corner edge, comprising: plate means having a first surface; a positioning block mounted on said plate means first surface for receiving the tube in contacting relation; pressure applicator means interconnected with said plate means and selectively movable from a first position relatively remote from said positioning block to a second closer position; and means carried by said pressure applicator means for releasably gripping the optical fiber portions outwardly of the tube and urging the said optical fibers toward the positioning block when the pressure applicator means is moved from the first position to the second position.

10. Apparatus as claimed in claim 9, in which spring means interconnects the plate means and the pressure applicator means for resiliently urging the pressure applicator means toward the first position.

11. Apparatus as claimed in claim 9 or 10, in which the pressure applicator means is generally U-shaped with its side arms being slidingly received within channels formed in the plate means.

12. Apparatus as claimed in claim 9, 10 or 11, in which the positioning block has a surface forming an internal corner edge with the plate means first surface for receiving the tube therewithin.

0221718

FIG.1

FIG.2

FIG.3

0221718

FIG.4

FIG.5

FIG.6

FIG.7